# EUROPEAN PATENT SPECIFICATION

(11) **EP 2 675 280 B1**
(45) Date of publication and mention of the grant of the patent: **11.10.2017**
(21) Application number: 12710524.5
(22) Date of filing: 16.02.2012
(51) Int. Cl.: A23C 1/12, A23C 9/142, A23C 19/028, A23C 19/05

(54) **Cheese and preparing the same**
Käse und seine Herstellung
Fromage et son procédé de préparation

(30) Priority: 18.02.2011 FI 20115161
(43) Date of publication of application: 25.12.2013
(73) Proprietor: Valio Ltd, 00370 Helsinki (FI)
(72) Inventor: AALTONEN, Terhi, 00370 Helsinki (FI); NURMI, Pirkko, 00370 Helsinki (FI)
(74) Representative: Kolster Oy Ab
(86) International application number: PCT/FI2012/050153
(87) International publication number: WO 2012/110706

(56) References cited:
- WO-A1-83/03523
- WO-A1-02/089592
- DE-A1- 3 224 364
- US-A- 5 750 177
- US-A1- 2003 077 357
- ARDISSON-KORAT A V ET AL: "Vatless Manufacturing of Low-Moisture Part-Skim Mozzarella Cheese from Highly Concentrated Skim Milk Microfiltration Retentates", JOURNAL OF DAIRY SCIENCE, AMERICAN DAIRY SCIENCE ASSOCIATION, US, vol. 87, no. 11, 1 November 2004 (2004-11-01), pages 3601-3613, XP026974734, ISSN: 0022-0302 [retrieved on 2004-11-01]
- SCHREIER K ET AL: "Application of cross-flow microfiltration to semi-hard cheese production from milk retentates", DESALINATION, ELSEVIER, AMSTERDAM, NL, vol. 250, no. 3, 30 January 2010 (2010-01-30), pages 1091-1094, XP026788790, ISSN: 0011-9164, DOI: 10.1016/J.DESAL.2009.09.115 [retrieved on 2009-10-14]
- SOLANKI G ET AL: "Physico-Chemical Properties of Skim Milk Retentates from Microfiltration", JOURNAL OF DAIRY SCIENCE, AMERICAN DAIRY SCIENCE ASSOCIATION, US, vol. 84, no. 11, 1 November 2001 (2001-11-01), pages 2381-2391, XP026990410, ISSN: 0022-0302 [retrieved on 2001-11-01]

## Description

### Field of the invention

The invention relates to cheese making and more particularly to a process involving microfiltration of milk, providing a product which is useful in cheese making.

### Background of the invention

Acidification is one of the basic operations in the manufacture of most cheeses. Acidification is usually production of lactic acid with starter cultures but also chemical acidification is possible. Acidification affects milk coagulation and the quality of the final product. Rennet (animal rennet of microbiological rennet) or coagulant, and necessary additives and ingredients are added to the standardized milk with starter coagulating (or curdling/- renneting) the casein component of milk system to form a gel (coagulum). After coagulation, gel is cut to the small cubes/pieces and cheese curd is formed. The curd is cooked or blended in cheese vat for approximately 1 h depending on cheese type and after that whey is removed and curd is moulded. The purpose of the vat stage is to provide a selected cheese type with a suitable granular size. Stirring, heating and other such methods enable the curd to be treated such that in a subsequent pressing stage high-quality cheese in terms of water and fat content can be achieved. Moulded cheeses are pressed and brined. After brining, cheeses are packaged and ripened.

Filtration techniques can be used in cheese-making to get a better and more energy efficient process. Advantages of using filtration techniques are increased cheese yield, reduced rennet addition amount and simplification of cheese making process. During ultrafiltration (UF) proteins and fats are concentrated to the retentate and part of whey proteins are still retained in cheese. UF techniques have been used in fresh and soft cheese making since 1974. However, there are quality problems in hard and semi-hard cheeses since whey proteins have an effect on cheese flavor and texture formation. UF techniques have not been generally used in semi-hard and hard cheese making. Whey proteins can be removed using microfiltration (MF) techniques where casein micelles and fats are concentrated in the retentate and whey proteins pass the membrane into the permeate. MF techniques make it possible to produce semi-hard and hard cheeses without disadvantages of whey proteins. However, it is known that high buffering capacity of MF retentate affects cheese ripening and texture, and viscosity of the concentrated MF retentate is hard to handle with traditional cheese making equipments.

Development of microfiltration processes has made it possible to produce full concentrated pre-cheese having an optimal composition, i.e. fat, casein and lactose contents, for cheese making. In order to achieve full concentration a concentration process such as evaporation is needed.

US 2003/0077357 A1 discloses microfiltration of skim milk where pH reduction is carried out during microfiltration. A microfiltration retentate is further processed to Mozzarella cheese by adding acidulant and rennet to the retentate.

Drawbacks of the known cheese making processes using various membrane techniques are associated with the high viscosity of the full concentrated pre-cheese. The high viscosity impedes significantly the processability of the pre-cheese to a final cheese product, i.e., making mixing of starter and rennet and dosing of the pre-cheese in cheese production complex.

### Brief description of the invention

It has now been found a method which significantly reduces the viscosity of a pre-cheese concentrate produced by microfiltration of milk and thus makes it possible to process the pre-cheese concentrate under process conditions to a cheese product in an easy manner.

As used herein, the expression "pre-cheese concentrate" and "full concentrated pre-cheese" relates to a composition having an appropriate combination of milk components, specifically a desired Ca:protein ratio for further cheese making.

Microfiltration of milk provides a casein concentrate as a retentate having optimal fat, casein and lactose contents for cheese making. The microfiltration retentate is then further concentrated to full concentrated pre-cheese in order to achieve the final total solids of cheese to be made from the pre-cheese. The total solids is typical of variety of cheese (for example 54% for Edam).

It was surprisingly found that pre-acidification of milk restrained the increase of the viscosity of the pre-cheese concentrate to a significant extent when the acidified casein concentrate was further concentrated to full concentrated pre-cheese. Without wishing to be bound by any theory, it is assumed that acidification enhances the solubility of calcium from the casein micelles and thus diminishes the size of the micelles, resulting in reduced viscosity of the pre-cheese concentrate.

The invention provides a method for producing cheese, comprising the steps of: providing a milk raw material; subjecting the milk raw material to microfiltration and pre-acidification to produce an acidified casein concentrate, where the microfiltration is performed prior to the pre-acidification; concentrating the acidified casein concentrate to produce full concentrated pre-cheese; and processing the full concentrated pre-cheese to a cheese product.

In another aspect, the invention provides cheese having a ratio of total content of ß-lactoglobulin and α-lactalbumin to glycomacropeptide of at most about 1.35.

### Brief description of Figures

Figure 1 is a flow diagram showing an embodiment of the method of invention.
Figure 2 is a diagram showing viscosities of the acidified and non-acidified microfiltration retentates of milk vs. total solids content during microfiltration of the retentates to the full concentrated pre-cheeses.

### Detailed description of the invention

The invention provides a method for producing cheese, comprising the steps of:
- providing a milk raw material,
- subjecting the milk raw material to microfiltration and pre-acidification to produce an acidified casein concentrate, where the microfiltration is performed prior to the pre-acidification,
- concentrating the acidified casein concentrate to produce full concentrated pre-cheese,
- processing the full concentrated pre-cheese to a cheese product.

Microfiltration is performed prior to pre-acidification, whereby the milk raw material is subjected to microfiltration to separate a casein concentrate as a microfiltration retentate and whey proteins as a microfiltration permeate, whereafter the casein concentrate is pre-acidified to produce the acidified casein concentrate.

The milk raw material may be milk as such obtained from an animal, such as a cow, sheep, goat, camel, mare or any other animal that produces milk suitable for human consumption, or milk that is pre-processed as desired.

In addition to the aforementioned cheeses, the term "cheese" also refers hereinafter in the present application to cheese-like products. In a cheese-like product, milk fat and/or protein is replaced by another suitable fat or protein, or both, partly or completely. Typically, milk fat is partly replaced by vegetable fat, such as rapeseed oil or fractionated palm oil.

In the context of the present invention, the milk raw material refers to milk, whey, and combinations of milk and whey as such or as a concentrate. The milk raw material may be supplemented by ingredients generally used in producing milk products, such as fat or sugar fractions and/or whey and milk protein fractions, e.g. milk protein, whey protein, casein, whey and milk protein fractions, α-lactalbumin, peptides, amino acids, e.g. lysine. Fat and lactose are removed from the milk raw material by utilizing different separation techniques. The milk raw material may thus be, for instance, whole milk, cream, low-fat or skim milk, low-lactose or lactose-free milk, ultrafiltered milk, diafiltered milk, microfiltered milk, or milk reconstituted from milk powder, organic milk or a combination of these. Preferably, the milk raw material is skim milk.

In an embodiment, the milk raw material is standardized in respect of the fat content and, if desired, protein content in a manner known in the art prior to microfiltration and/or pre-acidification. In another embodiment, standardization is performed onto the microfiltration/diafiltration retentate obtained in the process of the invention before pre-acidification.

The milk raw material can be heat-treated prior to subjecting it to microfiltration and/or pre-acidification. Generally, heat treatment improves the microbiological quality of the milk raw material. The heat treatment can be performed at a temperature ranging from 50°C to 150°C. Heat treatment of the milk raw material does not have an adverse effect on the subsequent curdling of the full concentrated pre-cheese. Examples of heat treatments to be used are pasteurization, high pasteurization, or heating at a temperature lower than the pasteurization temperature for a sufficiently long time. Specifically, UHT treatment (e.g. milk at 138°C, 2 to 4 s), ESL treatment (e.g. milk at 130°C, 1 to 2 s), pasteurization (e.g. milk at 72°C, 15 s), or high pasteurization (95°C, 5 min) can be mentioned. The heat treatment can be either direct (vapor to milk, milk to vapor) or indirect (tube heat exchanger, plate heat exchanger, scraped-surface heat exchanger).

The milk raw material can also be pretreated in order to lower the microbial load from it in a manner generally known in the art. Pathogenic and spoilage microorganisms removal is generally carried out by physical separation such as microfiltration, bactofugation or a combination thereof. The membrane pore size in microfiltration for microorganisms removal is typically about 1.4 µm.

For fractionation of a milk component like casein and whey protein with the microfiltration membrane pore size can range, for example, from 0.05 to 0.5 µm when a polymeric or ceramic microfiltration membrane is used.

The microfiltration of the milk raw material retains major portion of the casein in the retentate whereas a major portion of the whey proteins passes into the permeate. The microfiltration is preferably carried out utilizing a uniform transmembrane pressure loop recirculating the retentate through membrane and permeate through permeate site of membrane.

Microfiltration of the milk raw material is performed in such a manner that the milk raw material is concentrated by a factor of 1 to 4.5 times by volume, preferably 3.5 to 4.5 times by volume. The concentration factor (cf=K) refers to the ratio of the volume of the liquid fed to the filtration to the retentate, and it is defined with the following formula: K = feed (L) / retentate (L) (L = volume).

The microfiltration may comprise a plurality of microfiltration steps. Different steps may comprise, for instance, changing of process conditions and/or filtration membranes. A variable condition may be, for instance, filtration temperature, filtration pressure, addition of diafiltration medium (diawater), and/or concentration factor of filtration. Conditions can be changed by one or more variables.

In the microfiltration comprising a plurality of microfiltration steps, more than one MF permeate and retentate fractions may be formed. If desired, these MF permeate fractions may be combined into a single MF permeate stream. Accordingly, MF retentate fractions may be combined into a single MF retentate stream.

Microfiltration of the milk raw material is performed by means of one or more diafiltration (DF) steps. In the case of diafiltration, the concentration degree in the MF/DF filtration steps is over 4, preferably 20 to 70, particularly preferably 50 to 70. In an embodiment, the microfiltration includes two DF steps. A first DF step is advantageously used to enhance the depletion of the whey proteins of the casein concentrate obtained as a microfiltration retentate. Typically, 50 to 100% of α-lactalbumin and ß-lactoglobulin is removed after the first DF step. A second DF step is advantageously used to standardize the lactose content of said retentate to final lactose level of cheese, typically varying in the range from 0.5% to 2%. In an embodiment, lactose is removed substantially entirely from the retentate.

In the diafiltration steps, any material not substantially containing the substance that one wishes to remove from the retentate can be used as diawater. For example, tap water, brine or fractions of different membrane filtration processes of milk, such as NF permeate, UF permeate, RO retentate, chromatographically separated fraction, a combination of these, or dilution of any of these can be used as diawater. Said fractions can originate from a single process or separate processes. In the first DF step of the invention, for example, an UF permeate obtained from ultrafiltration of milk, an UF permeate obtained from ultrafiltration of a microfiltration permeate derived from microfiltration of milk, or water are suitable for use as diawater. In an embodiment, an UF permeate obtained from ultrafiltration of a microfiltration permeate derived from microfiltration of milk is used as diawater in the first diafiltration step. In the second DF step, for example, water, brine, an UF permeate obtained from ultrafiltration of milk, an UF permeate obtained from ultrafiltration of a microfiltration permeate derived from microfiltration of milk, or a NF permeate obtained from nanofiltration of an ultrafiltration permeate derived from ultrafiltration of milk are suitable for use as diawater. In an embodiment, brine is used as diawater in the second diafiltration step.

The lactose-standardized casein concentrate obtained by microfiltration and diafiltration has the water content of the fat-free part (ROV) of about 50% to 90% by weight.

The casein concentrate can be heat-treated in a manner as describe above for the milk raw material.

In the present invention, pre-acidification is typically carried out so as to provide a pH range of about 5.0 to 6.1, preferably less than 6.0, more preferably 5.9 at the most. It is an essential feature of the method of the invention that the pre-acidification is carried out in a controlled manner such that no gelling of casein is taken place during the pre-acidification in order not to increase the viscosity of the casein concentrate.

The pre-acidification is done microbiologically and/or chemically. Microbiological pre-acidification may be performed utilizing starter cultures as acidification agents and techniques known in the field. Chemical pre-acidification is done by adding a chemical starter, organic acids and/or inorganic acids as an acidifying agent. Examples of these include glucono-delta-lactone (GDL), citric acid, lactic acid. Natural acids from berries and fruit, such as the benzoic acid of lingonberry, may also be used in acidification. According to an embodiment of the invention, the pre-acidification is done by adding a chemical starter, organic acids and/or inorganic acids. The acid used in the pre-acidification is preferably glucono-delta-lactone. When using microbiological pre-acidification, it is necessary to make sure that the conditions required by the used starter bacteria are implemented in terms of nutrients, pH and temperature, for instance. The pre-acidification can be performed by a mesophilic starter, for example. The starter is a one-strain, multi-strain, mixed strain or mixed multi-strain starter. Most usual starters include a mesophilic starter, for example, starters obtained from the companies Christian Hansen and Danisco. The amount of the starter is conventionally 0.5 to 2%, typically 0.7 to 0.8%.

The acidified casein concentrate from the pre-acidification can be heat-treated in a manner as described above for the milk raw material.

The acidified casein concentrate is concentrated to provide full concentrated pre-cheese that is suitable for cheese making. In an embodiment of the invention, the concentration of the acidified casein concentrate is performed by membrane filtration, evaporation, or both membrane filtration and evaporation. Microfiltration or ultrafiltration can be used for membrane filtration. In an embodiment, the concentration is performed by microfiltration. The membrane filtrations can be enhanced by diafiltration, specifically if a pre-cheese concentrate having low Ca:protein ratio is desired. Low Ca:protein ratio is typical for soft cheeses. On the other hand, concentration performed by microfiltration followed by evaporation increases the calcium level and can be utilized for preparing semi-hard cheeses. Concentration by evaporation provides higher Ca:protein ratios and is typically utilized when semi-hard or hard cheeses are prepared.

Concentration of the acidified casein concentrate provides full concentrated pre-cheese having a ratio of calcium to total protein of 5.0 to 34.0 mg calcium/g total protein. In an embodiment of the invention, the ratio is 18 to 34 mg calcium/g total protein.

Different cheese types have a various amount of calcium that influences the properties of the final cheese. Typical calcium contents for some cheese types are given in Table 1 below. The harder the cheese the more calcium it contains.

**Table 1. Calcium contents of cheeses**

| Variety | Protein (%) | Ca (%) | Ca:Protein (mg g⁻¹) |
|---|---|---|---|
| Cottage | 15 | 0.08 | 5.4±0.5 |
| Camembert | 22 | 0.40 | 18.2±0.5 |
| Edam | 25 | 0.75 | 29.4±0.9 |
| Cheddar | 25 | 0.80 | 31.5±0.5 |
| Gouda | 25 | 0.82 | 32.2±0.7 |
| Emmental | 27 | 0.92 | 33.1±0.9 |

As stated above, the full concentrated pre-cheese obtained in the invention can be used for making variety of cheese. For example, soft, semi-soft, semi-hard (solid), hard, extra hard cheeses can be prepared. The expressions soft, semi-soft, semi-hard (solid), hard and extra hard are strictly defined in FAO/WHO A-6-1968 Codex General Standard for Cheese. Thus,
soft cheese in the present application refers to cheese whose water content of the fat-free part is more than 67%,
semi-soft cheese in the present application refers to cheese whose water content of the fat-free part is 61 to 69%,
semi-hard cheese in the present application refers to cheese whose water content of the fat-free part is 54 to 63%,
hard cheese in the present application refers to cheese whose water content of the fat-free part is 49 to 56%, and
extra hard cheese in the present application refers to cheese whose water content of the fat-free part is less than 51 %.

The term "cheese" also refers hereinafter in the present application to cheese-like products. In a cheese-like product, milk fat and/or protein is replaced by another suitable fat or protein, or both, partly or completely.

The water content of the fat-free part (ROV) and the total solids of the full concentrated pre-cheese is adjusted to a level which is desired for a final cheese product.

Processing the full concentrated pre-cheese produced in the process of the invention to a final cheese product can be realized in manner known in the art. If desired, an acidifier like starter, acid, acidogen, for example GDL, and a coagulant, like rennet and chymosin, are included in the pre-cheese. Different starters and starter mixtures may be used. The most common starters include a mesophilic starter (lactococcal starter), typically starters by Christian Hansen or Danisco, propionibacteria, typically Valio PJS, and a taste imparting adjunct (mesophilic and/or thermophilic adjunct starter), typically thermophilic Valio Lb 161 (shocked/non-shocked). For example, a mesophilic 0-starter, R-608 by Christian Hansen, is used as a starter. The starter and its amount depend on the cheese type and the conditions used. It is known that the amount of bulk starter is usually 0.5 to 2%, typically 0.7 to 0.8%. The amount of DVS starter (DVS/DVI) is usually 0.001 to 0.2%, typically 0.01 to 0.05%. In addition to a bulk starter, the method of the invention may use, for example, LH-32, BS-10 and CR-312 by Christian Hansen as such or in different combinations and amounts depending on the cheese and cheese-like product to be made as additional starters to impart taste. Alternatively, taste imparting adjunct starters may be added substantially simultaneously with milk- and/or whey-based minerals.

When ripened cheeses are prepared, salting is performed prior to ripening, for example with brine or milk- and/or whey-based minerals. In an embodiment of the invention, salting is performed prior to evaporation of the acidified casein concentrate to the full concentrated pre-cheese. In another embodiment, salting is performed after the evaporation simultaneously with the addition of an acidifier and coagulant.

The method of the invention provides cheeses having a ratio of total content of ß-lactoglobulin and α-lactalbumin to glycomacropeptide of at most about 1.35.

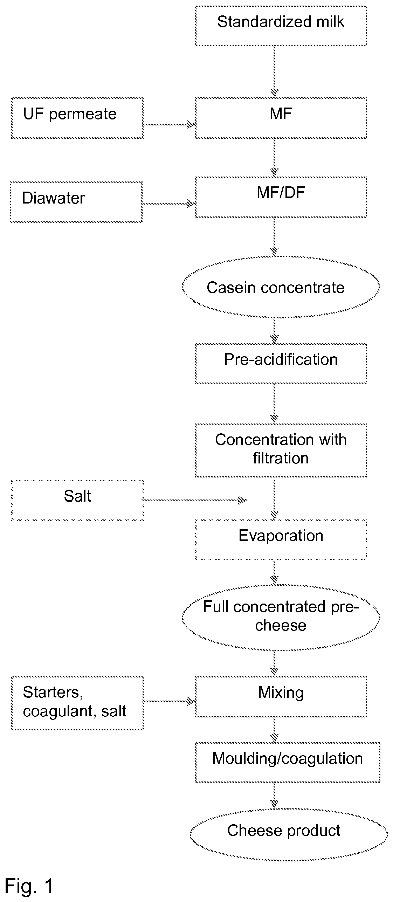

Fig. 1 illustrates an embodiment of the method of the invention. Standardized milk is subjected to microfiltration (MF) including two diafiltration (DF) steps to produce a casein concentrate. An ultrafiltration (UF) permeate obtained from ultrafiltration of milk is used as diawater in the first DF step, and water is used as diawater in the second DF step. The casein concentrate is subjected to pre-acidification and then further to concentration with filtration to produce full concentrated pre-cheese. If desired, the concentration with filtration can be continued with evaporation, as shown by a dashed line in the figure. When evaporation is used, salt is added to cheese mass prior to evaporation. The full concentrated pre-cheese is processed to a cheese product by adding starters, coagulant and salt thereto. The pre-cheese is transferred to a mould, coagulated and ripened therein to a cheese product.

In accordance with the invention, the cheese may be made either as a continuous cheese making process or as batches. The volume of a batch may vary depending on general conditions and available means. The method of the invention is preferably carried out continuously.

In another aspect, the invention provides cheese having a ratio of total content of ß-lactoglobulin and α-lactalbumin to glycomacropeptide of at most about 1.35.

The following examples are presented for further illustration of the invention.

### Example 1

Raw milk was partially-skimmed and the fat-protein ratio was standardized to a desired ratio typical for each cheese type prepared in Examples 1.1, 1.2. and 1.3 below. The standardized raw milk was pasteurized at 72°C for 15 s. Microfiltration was carried out by concentrating the standardized and pasteurized milk at 50°C by recirculating the milk through spiral-wound membranes with an 800-kDa molecular cutoff membrane. The feeding pressure of the raw milk was 40 kPa and the pressure difference was 80 kPa over the membrane.

Milk was concentrated by microfiltration to concentration factor 4 before diafiltration. Two separate diafiltration steps were then used. The first diafiltration was performed by using 1.6-fold, based on the used amount of the feed, ultrafiltration permeate obtained from ultrafiltration of a microfiltration permeate of the milk. The second diafiltration step was performed by using 0.28-fold brine (0.5% w/v NaCl) based on the used amount of the feed. After the diafiltration steps, the microfiltration retentate was pasteurized at 95°C for 15s.

The retentate obtained from diafiltration was inoculated with 0.1% (w/w) of R-608 starter cultures (from Christian Hansen) and incubated at 33°C for 3 hours. After incubation, pH of the retentate was 5.7. The acidified retentate was further processed to cheese with three separate methods illustrated in Examples 1.1, 1.2 and 1.3 below.

### Example 1.1 (concentration with filtration, no evaporation)

The acidified retentate obtained from Example 1 was heated to the filtration temperature (50°C) prior to concentrating it with microfiltration. The microfiltration was performed with a ceramic microfiltration membrane with molecular cutoff of 0.1 µm to provide full concentrated pre-cheese as a microfiltration retentate. Microfiltration was performed at 50°C by recirculating the retentate through membrane and permeate through permeate site of membrane. Uniform transmembrane pressure (TMP) was 70 kPa. The feed was concentrated to concentration factor 2.

The composition of the initial feed, i.e. standardized milk, the casein concentrate and the full concentrated pre-cheese are shown in Table 2.

**Table 2**

| | Standardized milk | Retentate from Ex. 1 (casein concentrate) | Concentration with microfiltration, no evaporation | |
|---|---|---|---|---|
| | | | Non-acidified reference (pH 6.6) | Full concentrated pre-cheese (invention) pre-acidified (pH 5.75) |
| Total solids (%) | 16.5 | 36.0 | 51.8 | 51.8 |
| Fat (%) | 4.6 | 15.5 | 29.0 | 29.0 |
| ROV (%) | 87.5 | 75.7 | 67.9 | 67.9 |
| Total protein (%) | 3.6 | 10.0 | 18.0 | 18.0 |
| Casein (%) | 2.8 | 9.5 | 16.7 | 16.7 |
| Whey protein (%) | 0.8 | 0.5 | 1.3 | 1.3 |
| Viscosity (mPas) | - | 4 | 2490 | 200 |
| Lactose (%) | 4.7 | 0.9 | 0.3 | 0.3 |
| Ca:Prot (mg/g) | 9.7 | 30.0 | 29.0 | 23.0 |

The results given in Table 2 show that the calcium content of casein concentrate can be reduced by further concentration by means of microfiltration. Further, pre-acidification clearly reduces the viscosity of the full concentrated pre-cheese.

After microfiltration, a mesophilic starter (0.7%), for example Hansen PR1, and a sufficient amount of a coagulant (rennet), and salt were added to the full concentrated pre-cheese for preparing soft cheese having typically protein content of less than 20%. The cheese mass thus obtained was transferred into a mould, coagulated and ripened for 5 to 8 weeks therein.

### Example 1.2 (concentration with filtration and evaporation)

The acidified retentate obtained from Example 1 was heated to the filtration temperature (50°C) prior to concentrating it with microfiltration. The microfiltration was performed with a ceramic microfiltration membrane with molecular cutoff of 0.1 µm. The microfiltration was performed at 50°C by recirculating the retentate through membrane and permeate through permeate site of membrane. Uniform transmembrane pressure (TMP) was 70 kPa. The feed was concentrated to concentration factor 2.

After microfiltration, salt was added to the microfiltration retentate. The retentate was then evaporated at 70°C and at 1 bar vacuum by using a Stephan-vat to provide full concentrated pre-cheese as a microfiltration retentate.

The composition of the initial feed, i.e. standardized milk, the casein concentrate and the full concentrated pre-cheeses (after concentration with microfiltration, and after concentration with microfiltration and evaporation) are shown in Table 3.

**Table 3**

| | Standardized milk | Retentate from Ex. 1 (casein concentrate) | Concentration with Microfiltration (no evaporation) | | Concentration with microfiltration and evaporation |
|---|---|---|---|---|---|
| | | | Non-acidified reference (pH 6.6) | Full Concentrated pre-cheese (invention) pre-acidified (pH 5.75) | Full concentrated pre-cheese (invention) pre-acidified (pH 5.75) |
| Total solids (%) | 11.7 | 21.0 | 37.3 | 37.0 | 54.0 |
| Fat (%) | 2.4 | 8.5 | 15.7 | 16.2 | 23.6 |
| ROV (%) | 90.5 | 86.3 | 74.4 | 75.2 | 60.2 |
| Total protein (%) | 3.6 | 10.1 | 19.1 | 18.5 | 27.0 |
| Casein (%) | 2.8 | 9.5 | 18.0 | 17.4 | 25.4 |
| Whey protein (%) | 0.6 | 0.5 | 0.9 | 0.9 | 1.3 |
| Viscosity (mPas) | - | 4 | 2380 | 80 | 2030 |
| Lactose (%) | 4.6 | 0.8 | 0.57 | 0.4 | 0.6 |
| Ca:Prot (mg/g) | | 30.0 | 28.9 | 27.3 | 27.3 |

The results given in Table 3 show that the calcium content of casein concentrate can be reduced by further concentration by means of microfiltration, and microfiltration and evaporation. Further, pre-acidification clearly reduces the viscosity of the full concentrated pre-cheese.

After evaporation, a mesophilic starter (0.7%) CH 19 and a sufficient amount of a coagulant (rennet) were added to the full concentrated pre-cheese for preparing Edam cheese. The cheese mass was cut into rectangular blocks of approximately 2 to 3 kg and transferred into a mould, pressed for 1 to 2 hours and packed into ripening bags, put into boxes, arranged on pallets and ripened for 5 to 8 weeks. The ripe cheese may be sliced, grated or further packed into consumer packages.

### Example 1.3 (concentration by evaporation)

The acidified retentate obtained from Example 1 was evaporated at 70°C and at 100 kPa vacuum to provide full concentrated pre-cheese as a microfiltration retentate.

The composition of the initial feed, i.e. standardized milk, the casein concentrate and the full concentrated pre-cheese are shown in Table 4.

**Table 4**

| | Standardized milk | Retentate from Ex. 1 (casein concentrate) | Evaporation |
|---|---|---|---|
| | | | Full concentrated pre-cheese (invention) pre-acidified (pH 5.75) |
| Total solids (%) | 15.8 | 18.0 | 62.3 |
| Fat (%) | 4.2 | 8.7 | 30.0 |
| ROV (%) | 87.9 | 89.8 | 53.9 |
| Total protein (%) | 3.6 | 8.4 | 29.0 |
| Casein (%) | 2.8 | 8.0 | 27.6 |
| Whey protein (%) | 0.6 | 0.4 | 1.4 |
| Viscosity (mPas) | - | 3 | 3870 |
| Lactose (%) | 4.6 | 0.1 | 0.3 |
| Ca:Prot (mg/g) | 9.7 | 33.0 | 33.0 |

After evaporation, a mesophilic starter (0.7%) CHN 19, a propionic bacterium Valio PJS, a taste-giving adjunct Valio Lb 161, and a sufficient amount of a coagulant (rennet) were added to the full concentrated pre-cheese for preparing emmental cheese. The cheese was transferred into a mould, pressed and ripened. The ripe cheese may be sliced, grated or further packed into consumer packages.

### Example 2

Raw milk was skimmed and pasteurized at 72°C for 15 s. Microfiltration was carried out by concentrating the skimmed and pasteurized milk at 15°C by recirculating the milk through spiral-wound membranes with an 800-kDa molecular cutoff membrane. The feeding pressure of the raw milk was 40 kPa and the pressure difference was 80 kPa over the membrane.

Milk was concentrated by microfiltration to concentration factor 4 before diafiltration. One diafiltration step was then used by using 1.6-fold, based on the used amount of the feed, ultrafiltration permeate obtained from ultrafiltration of a microfiltration permeate of the milk. After the diafiltration step, the microfiltration retentate was pasteurized at 95°C for 15 s. The retentate was standardized with heat-treated cream (95°C for 15 s) to get fat:protein ratio standardized to a desired ratio typical for each cheese type prepared in Examples 1.1, 1.2. and 1.3 above.

The retentate obtained from diafiltration was inoculated with 0.1% (w/w) of R-608 starter cultures (from Christian Hansen) and incubated at 33°C for 3 hours. After incubation, pH of the retentate was 5.7 The retentate was further processed to cheese with three separate methods illustrated in Examples 1.1, 1.2 and 1.3 above.

### Example 3

Raw milk was skimmed and pasteurized at 72°C for 15 s. Microfiltration was carried out by concentrating the skimmed and pasteurized milk at 15°C by recirculating the milk through spiral-wound membranes with an 800-kDa molecular cutoff membrane, with simultaneous adding glucono-delta-lactone. The feeding pressure of the raw milk was 40 kPa and the pressure difference was 80 kPa over the membrane.

Milk was concentrated by microfiltration to concentration factor 4 before diafiltration. One diafiltration step was then used by using 1.6-fold, based on the used amount of the feed, ultrafiltration permeate obtained from ultrafiltration of a microfiltration permeate of the milk. After diafiltration step, pH of the retentate was 5.7. The pre-acidified microfiltration retentate was pasteurized at 95°C for 15 s. The retentate was standardized with heat-treated cream (95°C for 15 s) to get fat:protein ratio standardized to a desired ratio typical for each cheese type prepared in Examples 1.1, 1.2. and 1.3 above.

The retentate obtained from diafiltration was further processed to cheese with three separate methods illustrated in Examples 1.1, 1.2 and 1.3 above.

### Example 4

This Example shows the favorable effect of pre-acidification on the viscosity of a casein concentrate during evaporation thereof. The casein concentrate was prepared as described in Example 1.

**Table 5**

| | Standardized milk | Retentate from Ex. 1 (casein concentrate) | During evaporation | | | |
|---|---|---|---|---|---|---|
| | | | Total solids 27% | | Total solids 45% | |
| | | | Non-acidified | Acidified | Non-acidified | Acidified |
| Total solids (%) | 11.7 | 21.0 | 27.0 | 27.0 | 45.0 | 45.0 |
| Fat (%) | 2.4 | 8.5 | 10.6 | 10.8 | 18.4 | 17.4 |
| Total protein (%) | 3.6 | 10.1 | 13.2 | 13.5 | 22.9 | 21.7 |
| Casein (%) | 2.8 | 9.5 | 12.5 | 12.7 | 21.6 | 20.5 |
| Whey protein (%) | 0.6 | 0.5 | 0.6 | 0.6 | 1.1 | 1.0 |
| Viscosity (mPas) | - | 4 | 9 | 16 | 2220 | 650 |
| Ca:Prot (mg/g) | | 30 | 31.8 | 31.8 | 31.8 | 31.8 |

The results show that evaporation of the pre-acidified cheese concentrate does not give rise to increase in viscosity contrary to the non-acidified cheese concentrate.

### Example 5

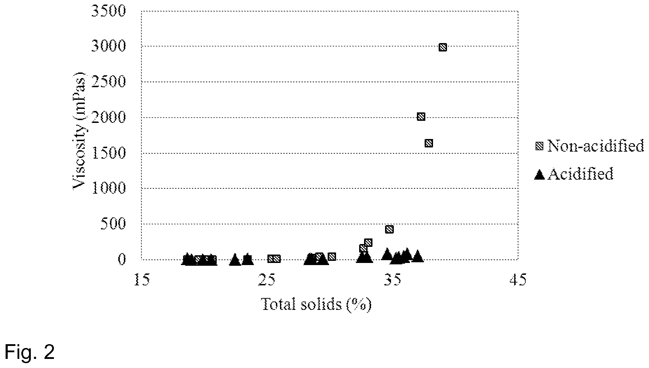

Fig. 2 shows viscosities of the acidified and non-acidified casein concentrates vs. total solids when concentration of the concentrates was further proceeded with microfiltration in order to produce full concentrated pre-cheeses. The diagram shows that pre-acidification retains the viscosity of the concentrate essentially constant whereas the viscosity of the non-acidified concentrate increases significantly during further concentration.

It was further found that without pre-acidification of the casein concentrate it was not possible to prepare full concentrated pre-cheeses having ROV of less than 65% suitable for semi-hard and hard cheeses like edam and emmental, since the viscosity of the concentrate increased exponentially as high as to a level over 10000 mPas. That means that the non-acidified concentrate having said ROV value is no more liquid wherefore addition of a rennet to produce cheese is not possible.

The invention and its embodiments are not limited to the examples described above but may vary within the scope of the claims.

## Claims

1. A method for producing cheese, comprising the steps of:
- providing a milk raw material,
- subjecting the milk raw material to microfiltration (MF) to separate casein into a microfiltration retentate and whey proteins into a microfiltration permeate,
- performing the microfiltration by means of one or more diafiltration (DF) steps to provide a casein concentrate as a diafiltration retentate, wherein the total concentration degree in the MF/DF steps is over 4, whereafter the casein concentrate is pre-acidified to produce an acidified casein concentrate, whereafter the acidified casein concentrate is concentrated to produce full concentrated pre-cheese,
- processing the full concentrated pre-cheese to a cheese product.

2. The method of claim 1, wherein the microfiltration includes two diafiltration steps, where an UF permeate obtained from ultrafiltration of milk, an UF permeate obtained from ultrafiltration of a microfiltration permeate derived from microfiltration of milk, or water, preferably an UF permeate obtained from ultrafiltration of a microfiltration permeate derived from microfiltration of milk, is used as diawater in the first step, and water, brine, an UF permeate obtained from ultrafiltration of milk, an UF permeate obtained from ultrafiltration of a microfiltration permeate derived from microfiltration of milk, or a NF permeate obtained from nanofiltration of an ultrafiltration permeate derived from ultrafiltration of milk, preferably brine is used as diawater in the second step to provide a lactose-standardized casein concentrate.

3. The method of claim 2, wherein the water content of the fat-free part (ROV) of the lactose-standardized casein concentrate is about 50% to 90% by weight.

4. The method of any one of the preceding claims, wherein the milk raw material, the casein concentrate and/or the acidified casein concentrate are/is subjected to a heat treatment at a temperature ranging from 50°C to 150°C.

5. The method of any one of the preceding claims, wherein the acidified casein concentrate has a pH value of about 5.0 to 6.1, preferably less than 6.0, more preferably 5.9 at most.

6. The method of any one of the preceding claims, wherein the concentration of the acidified casein concentrate is performed by membrane filtration and/or evaporation, preferably by filtration to produce full concentrated pre-cheese.

7. The method of claim 6, wherein the membrane filtration is microfiltration or ultrafiltration, preferably microfiltration.

8. The method of claim 7, wherein the microfiltration is performed by means of diafiltration.

9. The method of any one of the preceding claims, wherein the full concentrated pre-cheese has a ratio of calcium to total protein of 5 to 34 mg calcium/g total protein, preferably 18 to 34 mg calcium/g total protein.

10. The method of any one of the preceding claims, wherein an acidifier and/or a coagulant are added to the full concentrated pre-cheese to produce the cheese product.

11. The method of any one of the preceding claims, wherein the cheese product has a ratio of total content of ß-lactoglobulin and α-lactalbumin to glycomacropeptide of at most about 1.35.

## Patentansprüche

1. Verfahren zur Herstellung von Käse, umfassend die Schritte des:
- Bereitstellens eines Milch-Grundstoffs,
- Mikrofiltration (MF) Unterziehens des Milch-Grundstoffs, um Kasein zu einem Mikrofiltrations-Retentat und Molkeproteine zu einem Mikrofiltrations-Permeat zu separieren,
- Durchführens der Mikrofiltration mittels eines oder mehrerer Diafiltrations (DF)-Schritte, um ein Kaseinkonzentrat als Diafiltrations-Retentat bereitzustellen, wobei der Gesamtkonzentrationsgrad in den MF/DF-Schritten über 4 beträgt, wonach das Kaseinkonzentrat vorgesäuert wird, um ein gesäuertes Kaseinkonzentrat herzustellen, wonach das gesäuerte Kaseinkonzentrat konzentriert wird, um voll konzentrierten Vorkäse herzustellen,
- Verarbeitens des voll konzentrierten Vorkäses zu einem Käseprodukt.

2. Verfahren nach Anspruch 1, wobei die Mikrofiltration zwei Diafiltrationsschritte beinhaltet, wobei ein aus Ultrafiltration von Milch erhaltenes UF-Permeat, ein aus Ultrafiltration eines Mikrofiltrationspermeats, das aus Mikrofiltration von Milch stammt, erhaltenes UF-Permeat, oder Wasser, bevorzugt ein aus Ultrafiltration eines Mikrofiltrationspermeats, das aus Mikrofiltration von Milch stammt, erhaltenes UF-Permeat, als Diawasser in dem ersten Schritt verwendet wird, und Wasser, Salzwasser, ein aus Ultrafiltration von Milch erhaltenes UF-Permeat, ein aus Ultrafiltration eines Mikrofiltrationspermeats, das aus der Mikrofiltration von Milch stammt, erhaltenes UF-Permeat, oder ein aus Nanofiltration eines Ultrafiltrationspermeats, das aus Ultrafiltration von Milch stammt, erhaltenes NF-Permeat, bevorzugt Salzwasser, als Diawasser in dem zweiten Schritt verwendet wird, um ein laktosestandardisiertes Kaseinkonzentrat bereitzustellen.

3. Verfahren nach Anspruch 2, wobei der Wassergehalt des fettfreien Teils (ROV) des laktosestandardisierten Kaseinkonzentrats ungefähr 50 Gew.-% bis 90 Gew.-% beträgt.

4. Verfahren nach einem der vorhergehenden Ansprüche, wobei der Milch-Grundstoff, das Kaseinkonzentrat und/oder das gesäuerte Kaseinkonzentrat einer Wärmebehandlung auf einer Temperatur im Bereich von 50°C bis 150°C unterzogen werden/wird.

5. Verfahren nach einem der vorhergehenden Ansprüche, wobei das gesäuerte Kaseinkonzentrat einen pH-Wert von ungefähr 5,0 bis 6,1, bevorzugt weniger als 6,0, bevorzugter höchstens 5,9 aufweist.

6. Verfahren nach einem der vorhergehenden Ansprüche, wobei die Konzentration des gesäuerten Kaseinkonzentrats durch Membranfiltration und/oder Verdampfung durchgeführt wird, bevorzugt durch Filtration, um voll konzentrierten Vorkäse herzustellen.

7. Verfahren nach Anspruch 6, wobei die Membranfiltration Mikrofiltration oder Ultrafiltration ist, bevorzugt Mikrofiltration.

8. Verfahren nach Anspruch 7, wobei die Mikrofiltration mittels Diafiltration durchgeführt wird.

9. Verfahren nach einem der vorhergehenden Ansprüche, wobei der voll konzentrierte Vorkäse ein Verhältnis von Kalzium zu Gesamtprotein von 5 bis 34 mg Kalzium/g Gesamtprotein aufweist, bevorzugt 18 bis 34 mg Kalzium/g Gesamtprotein.

10. Verfahren nach einem der vorhergehenden Ansprüche, wobei ein Säuerungsmittel und/oder ein Gerinnungsmittel dem voll konzentrierten Vorkäse zugesetzt wird, um das Käseprodukt herzustellen.

11. Verfahren nach einem der vorhergehenden Ansprüche, wobei das Käseprodukt ein Verhältnis von Gesamtgehalt an β-Laktoglobulin und α-Laktalbumin zu Glykomakropeptid von höchstens ungefähr 1,35 aufweist.

## Revendications

1. Procédé de production de fromage, comprenant les étapes de :
- fournir une matière première lactée,
- soumettre la matière première lactée à une microfiltration (MF) pour séparer la caséine en un rétentat de microfiltration et les protéines de lactosérum en un perméat de microfiltration,
- réaliser la microfiltration au moyen d'une ou plusieurs étapes de diafiltration (DF) pour fournir un concentré de caséine comme rétentat de diafiltration, dans lequel le degré de concentration totale dans les étapes de MF/DF est au-dessus de 4, après quoi le concentré de caséine est pré-acidifié pour produire un concentré de caséine acidifié, après quoi le concentré de caséine acidifié est concentré pour produire un pré-fromage entièrement concentré,
- transformer le pré-fromage entièrement concentré en un produit à base de fromage.

2. Procédé selon la revendication 1, dans lequel la microfiltration inclut deux étapes de diafiltration, où un perméat d'UF obtenu par ultrafiltration du lait, un perméat d'UF obtenu par ultrafiltration d'un perméat de microfiltration dérivé de la microfiltration du lait, ou de l'eau, préférablement un perméat d'UF obtenu par ultrafiltration d'un perméat de microfiltration dérivé de la microfiltration du lait, est utilisé comme eau de diafiltration dans la première étape, et l'eau, l'eau salée, un perméat d'UF obtenu par ultrafiltration du lait, un perméat d'UF obtenu par ultrafiltration d'un perméat de microfiltration dérivé de la microfiltration du lait, ou un perméat de NF obtenu par nanofiltration d'un perméat d'ultrafiltration dérivé de l'ultrafiltration du lait, préférablement l'eau salée est utilisé comme eau de diafiltration dans la deuxième étape pour fournir un concentré de caséine standardisé en lactose.

3. Procédé selon la revendication 2, dans lequel la teneur en eau de la partie sans matière grasse (ROV) du concentré de caséine standardisé en lactose est d'environ 50 % à 90 % en poids.

4. Procédé selon l'une quelconque des revendications précédentes, dans lequel la matière première lactée, le concentré de caséine et/ou le concentré de caséine acidifié sont/est soumis à un traitement thermique à une température allant de 50°C à 150°C.

5. Procédé selon l'une quelconque des revendications précédentes, dans lequel le concentré de caséine acidifié a une valeur de pH d'environ 5,0 à 6,1, préférablement inférieure à 6,0, plus préférablement 5,9 au plus.

6. Procédé selon l'une quelconque des revendications précédentes, dans lequel la concentration du concentré de caséine acidifié est réalisée par filtration sur membrane et/ou par évaporation, préférablement par filtration pour produire du pré-fromage complètement concentré.

7. Procédé selon la revendication 6, dans lequel la filtration sur membrane est la microfiltration ou l'ultrafiltration, préférablement la microfiltration.

8. Procédé selon la revendication 7, dans lequel la microfiltration est réalisée au moyen de la diafiltration.

9. Procédé selon l'une quelconque des revendications précédentes, dans lequel le pré-fromage complètement concentré a un rapport calcium sur protéine totale de 5 à 34 mg de calcium/g de protéine totale, préférablement de 18 à 34 mg de calcium/g de protéine totale.

10. Procédé selon l'une quelconque des revendications précédentes, dans lequel un acidifiant et/ou un coagulant sont ajoutés au pré-fromage complètement concentré pour produire le produit à base de fromage.

11. Procédé selon l'une quelconque des revendications précédentes, dans lequel le produit à base de fromage a un rapport de la teneur totale en β-lactoglobuline et en α-lactalbumine rapportée au glycomacropeptide d'au plus environ 1,35.
